# EUROPEAN PATENT APPLICATION

(11) **EP 1 047 279 A2**
(43) Date of publication of application: **25.10.2000**
(21) Application number: 00303269.5
(22) Date of filing: 18.04.2000
(51) Int. Cl.: H04Q 7/38

(54) **Mobile terminal and method for preventing loss of information during handover**

(30) Priority: 20.04.1999 US 294891
(71) Applicant: LUCENT TECHNOLOGIES INC., Murray Hill, New Jersey 07974-0636 (US)
(72) Inventor: Orsic, Milo, Lincolnwood, IL 60646 (US)
(74) Representative: Buckley, Christopher Simon Thirsk

(57) **Abstract**

A mobile terminal (MT) and a method of preventing loss of information for a MT using a simple link-layer connection with new and old BSs. As the MT roams through the global Internet, the MT establishes a link-layer connection with a BS and obtains an IP address identifying this connection. When the MT establishes a new link-layer connection with a new BS and obtains a new IP address, the MT maintains the link-layer connection to the previously visited (old) BS and the old IP address for a predetermined time period. By maintaining two IP addresses and the link-layer connections to the new and old BSs at the same time, the MT can receive any IP traffic directed to the old IP address for a certain period of time and the IP traffic directed to the new IP address. The method prevents loss of information directed to the old IP address of the MT as the MT roams in the global Internet.

## Description

### Field of the Invention

The present invention relates to a mobile terminal and a method of preventing loss of information for the mobile terminal.

### Description of Related Art

A plurality of cells constitute a wireless access sub-network that communicates with the global Internet. Conventionally, a mobile terminal (MT) communicates with a base station (BS) in each cell to communicate through the global Internet. Each cell includes a single BS, where the cell and the associated BS are uniquely identified with a public IP address, e.g., routing prefix.

To communicate through the global Internet, the MT attaches itself to a certain BS and, through the attached BS functioning as a router, the MT is connected to the global Internet. During this attachment period, the MT obtains and operates under an IP address that consists of the attached BS routing prefix (IP address of the BS) and a host number associated with the MT itself This IP address of the MT changes as the MT roams through the global Internet by attaching itself to a different BS at different times.

More specifically, the MT establishes a link-layer connection with the desired BS and obtains a new IP address associated with the desired BS to attach to the BS of a particular cell. A link-layer connection is a logical connection between entities, and does not need to be a physical connection. Conventionally, Point-to-Point Protocol (PPP) provides this link-layer connection between the MT and the desired BS, and Internet Protocol Control Protocol (IPCP) allocates the new IP address to the MT. If the MT is already connected to a BS (old BS) when the MT seeks a new connection with a new BS, the link-layer connection between the MT and the old BS is disconnected before the new link-layer connection is established between the MT and the new BS.

Once the new link-layer connection is established and a new IP address has been allocated to the MT, the MT employs certain known protocols (e.g., Mobile IP protocol) to inform its IP peer-entity (e.g., home agent) of the new IP address of the MT. Thereafter, the IP peer-entity starts to direct any IP traffic that is destined for the MT using the new IP address of the MT.

However, during the time period in which the MT disconnects itself from the old BS, connects itself to the new BS, and informs its IP peer-entity of the new IP address, all of the IP traffic is still directed to the old IP address of the MT. But, since there is no longer a link-layer connection between the MT and old BS, valuable information directed to the old IP address is lost during this transitional period of the roaming MT.

A proposal has been made to correct this problem of loss of information in conventional Internet connection schemes. In this proposal, IP information that belongs to the MT is transferred from the old BS to the new BS after the MT disconnects itself from the old BS and connects itself to the new BS. Then the new BS directs the IP information from the old BS to the MT. This proposal, however, requires the MT to inform the old BS of the new IP address of the MT to effectuate the transfer, and complicates the roaming procedure. Further, certain protocols are needed to coordinate the needed communication between the old and new BSs.

### Summary Of The Invention

The present invention is directed to a mobile terminal and a method of preventing loss of information for a wireless MT using a simple link-layer connection with a new BS and a previously visited (old) BS. As the MT roams through the global Internet, the MT establishes a link-layer connection with a BS and obtains an IP address identifying this connection to receive IP traffic therethrough. When the MT establishes a new link-layer connection with a new BS and obtains a new IP address, the MT maintains the link-layer connection to the old BS and the old IP address corresponding to the old BS for a predetermined time period. By maintaining two IP addresses and the link-layer connections to the new and old BSs at the same time, the MT can receive any IP traffic directed to the old IP address for a certain period of time and the IP traffic directed to the new IP address. Accordingly, the present invention prevents loss of information directed to the old IP address of the MT as the MT roams in the global Internet.

### Brief Description Of The Drawings

The present invention will become more fully understood from the detailed description given hereinbelow and the accompanying drawings which are given by way of illustration only, wherein reference numerals designate corresponding parts in the various drawings and wherein:
Fig. 1 shows a diagram of a communication system operating through the global Internet according to a preferred embodiment of the present invention;
Fig. 2 shows MTs communicating with BSs of the communication system of Fig. 1; and
Fig. 3 shows a flowchart illustrating a method of preventing loss of information for a roaming MT according to the preferred embodiment of the present invention.

### Detailed Description Of The Preferred Embodiments

The following general description relates to a mobile terminal and a method of preventing loss of information for a roaming MT by establishing simultaneous link-layer connections between the roaming MT and at least two different BSs according to a preferred embodiment of the present invention. The MT can be any mobile communication unit, e.g., a mobile station, a mobile phone, a mobile host or the like. The BS communicates over radio waves, and can be any entity, e.g., a mobile switch, a router, etc., that provides a communication connection with the global Internet.

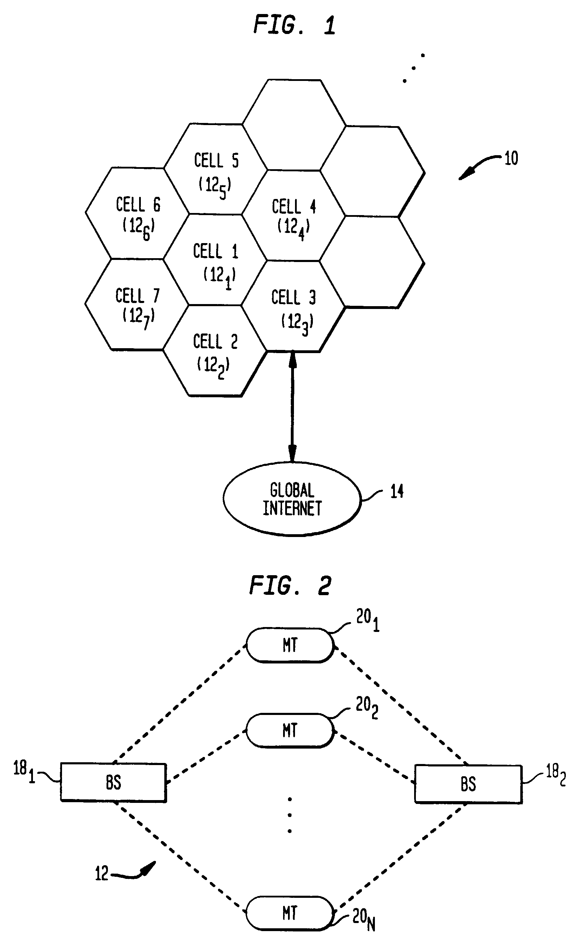

Fig. 1 shows a general diagram of a communication system operating via the global Internet according to the preferred embodiment of the present invention. As shown therein, the communication system 10 includes a plurality of cells 12₁, 12₂... 12_{N} each communicating with the global Internet 14. These cells 12₁, 12₂... 12_{N} define a wireless access sub-network.

Each of the cells 12₁, 12₂... 12_{N} (cell 12) includes a single Base Station (BS) 18. A plurality of MTs 20₁; 20₂... 20_{N} can be logically attached to at least two BSs (18₁ and 18₂), as shown in Fig. 2. Each BS 18 serves the cell (to which it belongs) and all neighboring cells using known radio technologies.

More specifically, each of the MTs 20₁, 20₂... 20_{N} (MT 20) can communicate with at least two BSs, simultaneously, using known technologies, e.g., CDMA technology, etc. For example, the BS in the first cell 12₁ serves the first cell 12₁ and neighboring cells 12₂, 12₃... 12₇. Each BS 18 also provides radio access to and from the plurality of MTs 20₁, 20₂... 20_{N} and functions as a router for directing IP traffic between the MTs 20₁, 20₂... 20_{N} via the global Internet 14. The IP traffic in the downstream direction (i.e., from the BS 18 to the MT 20) is typically broadcasted by the BS 18 while in the upstream direction (i.e., from the MT 20 to the BS 18), the IP traffic is typically transmitted through a statistically shared upstream radio channel.

As the MT 20 roams through the global Internet 14, the MT 20 establishes a link-layer connection with a particular BS and acquires an IP address identifying this connection. This IP address of the MT 20 is used by one IP peer-entity (e.g., home agent) that directs all IP traffic to the MT 20 or a plurality of IP peer-entities that directly communicate with the MT 20. When the MT continuously roams and establishes a new link-layer connection with a new BS, the MT 20 retains the previous (old) IP address identifying the connection with the previously visited (old) BS, after the MT 20 has acquired the new IP address. Hence, the MT 20 is able to receive IP traffic (e.g., datagrams) that has been delayed in the network or was directed to the old IP address of the MT 20. The MT 20 stores the old IP address for a predetermined time period, e.g., a time period exceeding the maximum time for which any IP packet directed to the old IP address can remain alive in the global Internet 14. After the predetermined time period, the MT 20 relinquishes the old IP address, completely disconnecting itself from the old BS. The relinquished old IP address is temporarily unavailable for a certain time duration so that it is not immediately allocated to other MTs, which ensures that other MTs do not receive IP traffic destined for the MT 20. The needed time duration can be, e.g., greater than the maximum time for which an old IP packet can remain alive in the global Internet 14.

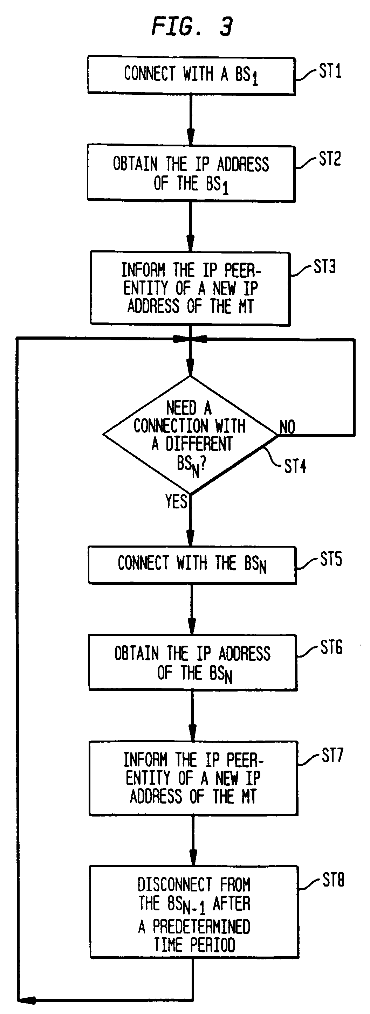

A specific example of a method of preventing loss of information for a mobile terminal according to the preferred embodiment of the present invention is described as follows referring to Fig. 3.

As shown in Fig. 3, a MT 20 employs known radio technologies to select a best BS₁ in a particular cell, e.g., based on the signal strength. The MT 20 initiates the attachment procedure by connecting with the BS₁ in Step ST1. This connection represents a link-layer connection between the MT 20 and the BS₁ and can be performed, e.g., by executing a PPP protocol. In Step ST2, once the link-layer connection is established, the MT 20 obtains an IP address of the BS₁, e.g., by executing an IPCP protocol, thereby acquiring a new IP address for the MT 20 itself.

Then in Step ST3, the MT 20 informs its IP peer-entity (or IP peer-entities) of the new IP address of the MT 20, e.g., by executing the Mobile IP protocol or other similar protocol. This allows the MT 20 to send and receive IP traffic over the global Internet 14 based on the IP address of the BS₁. In Step ST4, when the MT 20 roams through the global Internet 14 and desires a new connection with a different BS_{N}, the MT 20 initiates an attachment procedure with the new BS_{N} (here, "N" is an integer). The attachment procedure includes Step ST5 of establishing a link-layer connection with the new BS_{N}, e.g., by executing the PPP protocol with the new BS_{N}, and Step ST6 of obtaining the IP address of the new BS_{N}, e.g., by executing the IPCP protocol with the BS_{N} to acquire a new IP address for the MT 20 itself. At this time, the MT 20 has at least two IP addresses (one based on the IP address of the old BS and the other based on the IP address of the new BS) and at least two active link-layer connections to the old and new BSs. However, all of the IP traffic is still transmitted and received only through the old IP address of the MT 20 at this time.

In Step ST7, the MT 20 informs of its at least IP peer-entity of the newly acquired IP address, e.g., by executing the Mobile IP or other protocols with the IP peer-entity. Then the new IP address of the MT 20 will be in effect such that all the IP traffic directed to and sent from the MT 20 is now processed by the new BS_{N}. That is, upon receipt of the new IP address of the MT 20, the IP peer-entity (e.g., home agent) begins to forward the IP traffic to the MT 20 by using the new IP address. It is possible that during this transitional period, some other IP peer-entities may use the old IP address of the MT 20. Consequently, the MT 20 receives, through both the new BS and the old BS, IP traffic and the packets en route which were sent by the other IP peer-entities who have been already informed of the new IP address of the MT 20. Each IP peer-entity may confirm first to the MT 20 that it has received the new IP address of the MT 20 before it begins directing its IP traffic to the new IP address.

With or without the confirmations from its IP peer-entities, the MT 20 still maintains the old IP address and the link-layer connection with the old BS for a predetermined time period. This time period may correspond to the time period exceeding the maximum time for which any IP packet directed to the old IP address can remain alive in the global Internet 14, or other time period based on need and situation. This time period also allows the MT 20 to receive any IP traffic directed to the old BS, which may have been delayed in the global Internet 14.

In Step ST8, once the predetermined time period has lapsed, the MT 20 disconnects itself from the old BS (e.g., BS_{N-1}) and eliminates the old IP address of the MT 20 from its use and records.

As the MT 20 roams in the global Internet 14, the process returns from Step ST8 to Step ST4 to determine whether the MT 20 seeks a new link-layer connection with a different BS. If so, Steps ST4 through ST8 are repeated as long as the MT 20 roams in the global Internet 14.

According to the preferred embodiment of the present invention, the roaming MT 20 is able to receive all IP traffic directed thereto since the MT 20 employs at least two IP addresses corresponding to the old and new BSs, simultaneously, for a predetermined time period. This is an extremely simple and advantageous way to prevent any loss of information directed to a roaming MT 20. Further, the present invention enhances the Internet technology by reducing costs and process time.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method of preventing loss of information for a mobile terminal, comprising:
(a) maintaining at least first and second, independent internet protocol (IP) addresses for the mobile terminal; and
(b) receiving IP traffic through the first and second IP addresses by the mobile terminal.

2. The method of claim 1, wherein the maintaining step (a) includes;
(a1) logically attaching the mobile terminal to a first station; and
(a2) logically attaching the mobile terminal to a second station while the mobile terminal is logically attached to the first station, to receive the IP traffic through the logically attached first and second stations based on the first and second IP addresses.

3. The method of claim 2, further comprising:
(c) logically detaching the mobile terminal from the first station after a predetermined time period.

4. The method of claim 3, wherein in the logically detaching step (c), the predetermined time period exceeds a maximum time for which any IP packet directed to the MT can remain alive in the global internet.

5. The method of claim 2, wherein the logically attaching step (a1) includes:
(a11) link-layer connecting the mobile terminal to the first station; and
(a12) acquiring, by the mobile terminal, the first IP address based on an IP address of the first station.

6. The method of claim 5, wherein in the acquiring step (a12), the first IP address includes the IP address of the first station and a host number associated with the mobile terminal.

7. The method of claim 5, wherein the logically attaching step (a2) includes:
(a21) link-layer connecting the mobile terminal to the second station; and
(a22) acquiring, by the mobile terminal, the second IP address based on an IP address of the second station.

8. The method of claim 7, wherein in the acquiring step (a22), the second IP address includes the IP address of the second station and a host number associated with the mobile terminal.

9. The method of claim 7, wherein the receiving step (b) includes:
(b1) notifying at least one IP peer-entity of the first IP address; and
(b2) receiving the IP traffic from the IP peer-entity through the first station based on the first IP address.

10. The method of claim 9, wherein the receiving step (b) further includes:
(b3) notifying the IP peer-entity of the second IP address; and
(b4) receiving the IP traffic from the IP peer-entity through the second station based on the second IP address.

11. The method of claim 10, wherein the steps (b2) and (b4) are performed at the same time.

12. The method of claim 9, wherein in the notifying step (b1), the IP peer-entity is a home agent for the mobile terminal.

13. The method of claim 1, wherein the maintaining step (a) is performed for a predetermined time period, and after the predetermined period, the first IP address of the mobile terminal is relinquished from the mobile terminal.

14. A method of preventing loss of information for a mobile terminal, comprising:
obtaining a new IP address corresponding to a new base station while maintaining a link-layer connection with a previously visited base station; and
disconnecting the link-layer connection with the previously visited base station after a predetermined time period.

15. The method of claim 14, wherein in the disconnecting step, the predetermined time period exceeds a maximum time for which any IP packet directed to the mobile terminal can remain alive in the global internet.

16. The method of claim 14, wherein during the obtaining step, the mobile terminal still stores therein an old IP address corresponding to the previously visited base station.

17. The method of claim 16, wherein in the obtaining step, the new IP address includes an IP address of the new base station and a host number associated with the mobile terminal.

18. The method of claim 17, wherein in the obtaining step, the old IP address includes an IP address of the previously visited base station and the host number associated with the mobile terminal.

19. The method of claim 14, further comprising:
receiving IP traffic from the new and previously visited base stations at the same time.

20. The method of claim 19, wherein the receiving step includes:
notifying at least one IP peer-entity of an old IP address of the mobile terminal; and
receiving the IP traffic from the IP peer-entity through the previously visited base station based on the old IP address.

21. The method of claim 20, wherein the receiving step further includes:
notifying the IP peer-entity of the new IP address; and
receiving the IP traffic from the IP peer-entity through the new base station based on the new IP address.

22. The method of claim 20, wherein in the notifying steps, the IP peer-entity is a home agent for the mobile terminal.

23. A mobile terminal, comprising:
a first unit for maintaining therein at least first and second, independent internet protocol (IP) addresses for the mobile terminal at one time; and
a second unit for receiving IP traffic through the first and second IP addresses.

24. The mobile terminal of claim 23, wherein the first unit executes a first program to logically attach the mobile terminal to a first station, and a second program to logically attach the mobile terminal to a second station while the mobile terminal is logically attached to the first station, whereby the second unit receives the IP traffic through the logically attached first and second stations based on the first and second IP addresses.

25. The mobile terminal of claim 24, wherein the first unit executes a third program to logically detach the mobile terminal from the first station after a predetermined time period.

26. The mobile terminal of claim 25, wherein the predetermined time period exceeds a maximum time for which any IP packet directed to the mobile terminal can remain alive in the global internet.

27. The mobile terminal of claim 24, wherein the first IP address includes the IP address of the first station and a host number associated with the mobile terminal.

28. The mobile terminal of claim 27, wherein the second IP address includes the IP address of the second station and a host number associated with the mobile terminal.

29. The mobile terminal of claim 23, wherein the second unit notifies at least one IP peer-entity of the first IP address to receive the IP traffic from the IP peer-entity through the first station based on the first IP address.

30. The mobile terminal of claim 29, wherein the second unit notifies the IP peer-entity of the second IP address to receive the IP traffic from the IP peer-entity through the second station based on the second IP address.

31. The mobile terminal of claim 29, wherein the IP peer-entity is a home agent for the mobile terminal.

32. The mobile terminal of claim 23, wherein the first unit maintains the first IP address with the second IP address for a predetermined time period, and after the predetermined period, the first unit relinquishes the first IP address from the mobile terminal.

33. A communication system comprising:
first and second base stations;
a mobile terminal logically attachable and detachable to and from each of the first and second base stations,
wherein the mobile terminal maintains both first and second internet protocol (IP) addresses respectively corresponding to the first and second base stations as the mobile terminal roams through the global internet.

34. The communication system of claim 33, wherein the first IP address includes an IP address of the first base station and a host number associated with the mobile terminal.

35. The communication system of claim 33, wherein the second IP address includes an IP address of the second base station and a host number associated with the mobile terminal.

36. The communication system of claim 33, wherein after the mobile terminal maintains the first and second IP addresses for a predetermined time period, the mobile terminal relinquishes a further use of the first IP address.

37. The communication system of claim 36, wherein the predetermined time period exceeds a maximum time for which any IP packet directed to the mobile terminal can remain alive in the global internet.

38. The communication system of claim 33, wherein the first base station allocates the first IP address to the mobile terminal when the mobile terminal is logically attached to the first base station.

39. The communication system of claim 38, wherein the second base station allocates the second IP address to the mobile terminal when the mobile terminal is logically attached to the second base station.
